(19) **Europäisches Patentamt / European Patent Office / Office européen des brevets**

(11) **EP 3 406 669 A1**

(12) **EUROPEAN PATENT APPLICATION**
published in accordance with Art. 153(4) EPC

(43) Date of publication:
**28.11.2018 Bulletin 2018/48**

(21) Application number: **17741531.2**

(22) Date of filing: **20.01.2017**

(51) Int Cl.:
**C08L 101/00** (2006.01)　　**C08K 3/04** (2006.01)
**C08K 3/32** (2006.01)　　**C09K 21/02** (2006.01)
**C09K 21/04** (2006.01)

(86) International application number:
**PCT/JP2017/001929**

(87) International publication number:
**WO 2017/126654 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.01.2016 JP 2016008492**
**28.11.2016 JP 2016230006**

(71) Applicant: **Sekisui Chemical Co., Ltd.**
**Osaka-shi, Osaka 530-8565 (JP)**

(72) Inventors:
- **SHIMAMOTO, Michio**
  **Hasuda-shi**
  **Saitama 349-0198 (JP)**
- **DOHI, Akihito**
  **Hasuda-shi**
  **Saitama 349-0198 (JP)**
- **YANO, Hideaki**
  **Hasuda-shi**
  **Saitama 349-0198 (JP)**

(74) Representative: **Ter Meer Steinmeister & Partner**
**Patentanwälte mbB**
**Nymphenburger Straße 4**
**80335 München (DE)**

(54) **FIRE-RESISTANT RESIN COMPOSITION**

(57) A fire-resistant resin composition comprising a matrix resin, a thermally expandable graphite, and a lower phosphoric acid salt is characterized in that the fire-resistant resin composition comprises the lower phosphoric acid salt in an amount of 5 mass% or more, and a flammable component in an amount of 65 mass% or less.

EP 3 406 669 A1

**Description**

Technical Field

Cross-Reference to Related Applications

This application claims priority to Japanese Patent Application No. 2016-008492, filed on January 20, 2016, and Japanese Patent Application No. 2016-230006, filed on November 28, 2016, the entire contents of which are herein incorporated by reference.

Technical Field

The present invention relates to a fire-resistant resin composition.

Background Art

There have been various flame-retardant resin compositions comprising a lower phosphoric acid salt as a flame retardant (for example, Patent Document 1). On the other hand, flame-retardant resin compositions comprising a large amount of lower phosphoric acid salt and fire-resistant members formed from such a flame-retardant resin composition may have problems such that they decompose at 250°C or higher, generate flammable gas such as phosphine gas, and ignite with a flame; and, in case of fire, the flame spreads to the other portions of the flame-retardant resin composition, and further spreads to the other portions of the fire prevention equipment. As a result, the fire-resistant function of the fire-resistant member may not be sufficiently exhibited.

Citation List

Patent Documents

Patent Document 1: JP2004-204194A

Summary of Invention

Technical Problem

Regarding the fire-resistant members formed from a fire-resistant resin composition comprising a lower phosphoric acid salt as a flame retardant, a structure capable of preventing spread of fire due to ignition caused by flammable gas generated by decomposition of lower phosphoric acid salt, while maintaining the fire resistance, has been demanded.
One of the objects of the present invention is to provide a fire-resistant resin composition and a fire-resistant member having excellent fire-resistant property and capability of inhibiting spread of fire.

Solution to Problem

The present inventors found that the above object can be accomplished by setting the amount of the flammable component in a fire-resistant resin composition to 65 mass% or less, in a fire-resistant resin composition containing a certain amount or more of lower phosphoric acid salt as a flame retardant. With this finding, the inventors completed the present invention.
More specifically, the present invention encompasses the following items.
Item 1: A fire-resistant resin composition comprising a matrix resin, a thermally expandable graphite, and a lower phosphoric acid salt, the fire-resistant resin composition comprising a lower phosphoric acid salt in an amount of 5 mass% or more, and a flammable component in an amount of 65 mass% or less.
Item 2: The fire-resistant resin composition according to Item 1, wherein the fire-resistant resin composition further comprises a liquid additive; the ignition point of the liquid additive in the fire-resistant resin composition is 350°C or more; and the amount of the liquid additive is 10 mass% or more.
Item 3. The fire-resistant resin composition according to Item 1 or 2, wherein the lower phosphoric acid salt is at least one of a metal phosphate and a metal phosphite.
Item 4: The fire-resistant resin composition according to Item 2 or 3, wherein the expansion start temperature of the thermally expandable graphite in the fire-resistant resin composition is not more than the flash point of the liquid additive, and the amount of the thermally expandable graphite is 15 mass% or more.

Item 5: The fire-resistant resin composition according to any one of Items 1 to 4, wherein the fire-resistant resin composition comprises a polyphosphoric acid salt, and the ratio of the polyphosphoric acid salt to the lower phosphoric acid salt (polyphosphoric acid salt/lower phosphoric acid salt) is 1.0 or less.

Item 6: The fire-resistant resin composition according to any one of Items 1 to 5, wherein the matrix resin comprises a vinyl chloride resin.

Item 7. The fire-resistant resin composition according to any one of Items 1 to 5, wherein the matrix resin comprises an epoxy resin.

Item 8. A fire-resistant member formed from the fire-resistant resin composition according to any one of Items 1 to 7.

Item 9. The fire-resistant member according to Item 8, wherein the fire-resistant member is a molded article.

Item 10. A fire prevention equipment comprising the fire-resistant member according to Item 8 or 9.

Advantageous Effects of Invention

The fire-resistant resin composition and fire-resistant member of the present invention are capable of inhibiting spread of fire due to self-combustion, while exerting excellent fire-resistant property.

Description of Embodiments

Hereinbelow, embodiments of the present invention are described.

The fire-resistant resin composition constituting the fire-resistant member of the present invention comprises a matrix resin, a thermally expandable graphite, and a lower phosphoric acid salt. The amount of the lower phosphoric acid salt is 5 mass% or more, and the amount of a flammable component is 65 mass% or less, in the fire-resistant resin composition.

Matrix Resin

A wide range of known resins may be used as the matrix resin; examples include thermoplastic resins, thermosetting resins, rubber substances, and combinations thereof.

Examples of thermoplastic resins include polyolefin resins such as polypropylene resin, polyethylene resin, poly(1-)butene resin, or polypentene resin; and synthetic resins such as polystyrene resin, acrylonitrile-butadiene-styrene (ABS) resin, polycarbonate resin, polyphenylene ether resin, (meth)acrylic resin, polyamide resin, polyvinyl chloride resin, novolac resin, polyurethane resin, polyisobutylene, polyvinyl acetate, ethylene-vinyl acetate (EVA), TPO, and like elastomers.

Examples of thermosetting resins include synthetic resins such as polyurethane, polyisocyanate, polyisocyanurate, phenol resin, epoxy resin, urea resin, melamine resin, unsaturated polyester resin, or polyimide.

Examples of rubber substances include natural rubber, isoprene rubber, butadiene rubber, 1,2-polybutadiene rubber, styrene-butadiene rubber, chloroprene rubber, nitrile rubber, butyl rubber, chlorinated butyl rubber, ethylene-propylene rubber, ethylene-propylene-diene rubber (EPDM), chlorosulfonylated polyethylene, acrylic rubber, epichlorohydrin rubber, highly vulcanized rubber, nonvulcanized rubber, silicone rubber, fluorine rubber, and urethane rubber.

One or more kinds of these synthetic resins and/or rubber substances may be used.

The amount of the matrix resin in the fire-resistant resin composition is not particularly limited. However, the amount is not less than 5 mass% and less than 90 mass%, preferably not less than 10 mass% and less than 70 mass%.

Preferably, the matrix resin contains a polyvinyl chloride resin. The polyvinyl chloride resin is excellent in flame retardancy and self-extinguishing property.

In a preferred embodiment, the matrix resin is a nonflammable and self-extinguishing matrix resin. The "nonflammable property" of the matrix resin is defined as follows. A matrix resin is cut to a test sample having a size of 10 cm (length) $\times$ 10 cm (width) $\times$ 5 cm (thickness), and the gross calorific value when the test sample is heated for 20 minutes at a radiant heat intensity of 50 kW/m$^2$ in a cone calorimeter test according to ISO-5660 is measured. A matrix resin having the gross calorific value of 8 MJ/m$^2$ or less in the 20-minute heating is determined as a nonflammable matrix resin. The "self-extinguishing property" of the matrix resin designates an inability of combustion by itself when the fire source is removed.

The matrix resin may contain synthetic resins such as thermoplastic resins other than polyvinyl chloride resin, thermosetting resins, or rubber, described above. However, the amount of the polyvinyl chloride resin in the matrix resin is preferably 50 mass% or more, more preferably 50 mass% or more, more preferably 60 mass% or more, more preferably 70 mass% or more, more preferably 80 mass% or more, more preferably 90 mass% or more.

The polyvinyl chloride resin may be a homopolymer or a copolymer of vinyl chloride. Vinyl chloride-copolymerizable monomers are not limited, and examples include ethylene, propylene, acrylonitrile, vinyl acetate, maleic acid or an ester thereof, acrylic acid or an ester thereof, methacrylic acid or an ester thereof, vinylidene chloride, and the like. The polyvinyl chloride resin is preferably a vinyl chloride homopolymer.

The polyvinyl chloride resin may be a chlorinated vinyl chloride resin in which a part or the entirety thereof is chlorinated to increase the flame retardancy. The chlorinated vinyl chloride resin may be produced by a known method, or may be obtained from commercial suppliers.

The average polymerization degree of the polyvinyl chloride resin is not limited, and is generally 500 to 6000, preferably 800 to 3000.

The method for producing the polyvinyl chloride resin is not limited. For example, the polyvinyl chloride resin may be produced by suspension polymerization, bulk polymerization, emulsion polymerization, and the like; or may be obtained from commercial suppliers.

Preferably, the matrix resin includes an epoxy resin. Epoxy resins have excellent fire resistance.

Thermally Expandable Graphite

Thermally expandable graphite is a previously known material that expands by heating, and is a graphite intercalation compound formed by treating powder of natural scaly graphite, pyrolytic graphite, kish graphite, or the like, with an inorganic acid such as concentrated sulfuric acid, nitric acid, selenic acid, or the like; and a strong oxidizing agent such as concentrated nitric acid, perchloric acid, a perchlorate, a permanganate, a dichromate, a dichromate, hydrogen peroxide, or the like. The thermally expandable graphite is a kind of crystalline compound that retains the layered structure of carbon.

The thermally expandable graphite obtained by subjecting to an acid treatment as mentioned above may further be neutralized with ammonia, an aliphatic lower amine, an alkali metal compound, an alkaline earth metal compound, or the like. Examples of commercially available products of the thermally expandable graphite include "GREP-EG" (Tosoh Corporation), "GRAFGUARD" (GRAFTECH), and the like.

The amount of the thermally expandable graphite in the fire-resistant resin composition is preferably 5 to 50 mass%, and more preferably 10 to 40 mass%. In one embodiment, the amount of the thermally expandable graphite in the fire-resistant resin composition is 15 mass% or more. Further, the amount of the thermally expandable graphite in the matrix resin is preferably 10 to 350 parts by mass, more preferably 50 to 250 parts by mass, and further preferably 75 to 175 parts by mass, per 100 parts by mass of the matrix resin.

Further, when the fire-resistant resin composition contains a liquid additive such as a plasticizer, the expansion start temperature of the thermally expandable graphite contained in the fire-resistant resin composition is preferably not higher than the flash point of the liquid additive contained in the fire-resistant resin composition. With the expansion start temperature of the thermally expandable graphite not higher than the flash point of the liquid additive, the liquid additive may be sealed in the expansion layer of the thermally expandable graphite, thereby preventing the liquid additive from catching fire. Further, the heat-insulating layer of the thermally expandable graphite serves to inhibit temperature increase inside the expansion layer; as a result, vaporization or decomposition of the liquid additive is delayed, thus contributing to a decrease in combustion speed, and thereby contributing to expression of fire-resistant property and inhibition of ignition.

A larger amount of thermally expandable graphite ensures sealing of flammable gas, and is therefore preferable in terms of inhibition of the ignition. However, if the amount is excessively large, the formability decreases, and may cause an economic problem.

Lower phosphoric acid salt

The term "lower phosphoric acid salt" designates a noncondensed, i.e., unpolymerized inorganic phosphoric acid salt; examples of phosphoric acid include primary phosphoric acid, secondary phosphoric acid, tertiary phosphoric acid, metaphosphoric acid, phosphorous acid, and hypophosphorous acid. Examples of salts include alkali metal salts (such as lithium salts, sodium salts, or potassium salts), alkaline-earth metal salts (such as magnesium salts, calcium salts, strontium salts, or barium salts), salts of periodic table Group 3B metals (such as aluminum salts), transition metal salts (such as titanium salts, manganese salts, iron salts, nickel salts, copper salts, zinc salts, vanadium salts, chromium salts, molybdenum salts, or tungsten salts), ammonium salts, amine salts, for example, guanidine salts or salts of triazine compounds (such as melamine salts, or melem salts) and the like. Metal salts are preferable.

In one embodiment, the lower phosphoric acid salt is at least one of metal phosphate and metal phosphite. The metal phosphite may be foamable. Further, metal phosphite may be used after being surface-treated with a surface-treating agent or the like so as to increase the adherence to the matrix resin. Examples of such surface-treating agents include functional compounds (e.g., epoxy-based compounds, silane-based compounds, titanate-based compounds, etc.).

Examples of metal salts of lower phosphoric acid include aluminum primary phosphate, sodium primary phosphate, potassium primary phosphate, calcium primary phosphate, zinc primary phosphate, aluminum secondary phosphate, sodium secondary phosphate, potassium secondary phosphate, calcium secondary phosphate, zinc secondary phosphate, aluminum tertiary phosphate, sodium tertiary phosphate, potassium tertiary phosphate, calcium tertiary phosphate, zinc tertiary phosphate, aluminum phosphite, sodium phosphite, potassium phosphite, calcium phosphite, zinc phosphite, aluminum hypophosphite, sodium hypophosphite, potassium hypophosphite, calcium hypophosphite, zinc hypophosphite, aluminum metaphosphate, sodium metaphosphate, potassium metaphosphate, calcium metaphosphate, zinc metaphosphate, and the like.

In terms of generation of flammable gas such as phosphine gas, aluminum salts are preferably used.

The amount of the lower phosphoric acid salt in the fire-resistant resin composition is 5 mass% or more, preferably 6 mass% or more, more preferably 7.5 mass% or more. The upper limit of the amount of the lower phosphoric acid salt is not particularly limited. However, the amount is preferably 50 mass% or less in the fire-resistant resin composition. More preferably, the amount of the lower phosphoric acid salt is 25 mass% or less, further preferably 20 mass% or less. Since the amount of the lower phosphoric acid salt is 5 mass% or more, flame retardancy is imparted to the fire-resistant resin composition, and the effects of the other components are not impaired.

Further, the amount of the lower phosphoric acid salt relative to the matrix resin is not particularly limited. However, the amount of the lower phosphoric acid salt is 5 to 250 parts by mass, preferably 10 to 150 parts by mass, more preferably 20 to 100 parts by mass, per 100 parts by mass of the matrix resin.

Such lower phosphoric acid salts are excellent in safety, economically advantageous, and ensure greatly improved flame retardancy.

Liquid Additives

The fire-resistant resin composition of the present invention may contain a liquid additive. By containing the liquid additive, workability upon the sheet production and flexible handling of the sheet can be imparted.

The liquid additive is not particularly limited insofar as it is a liquid additive in a liquid state at room temperature (23°C), such as a plasticizer generally used in the production of a fire-resistant resin composition. For example, the following liquid additives, such as plasticizers, may be used singly or in a combination of two or more: phthalic acid ester-based plasticizers, such as di-2-ethylhexyl phthalate (DOP), di-n-octyl phthalate, diisononyl phthalate (DINP), diisodecyl phthalate (DIDP), diundecyl phthalate (DUP), diethylphthalate (DEP), dibutylphthalate (DBP), and phthalic acid esters of higher alcohols having about 10 to 13 carbon atoms or mixed alcohols thereof;

aliphatic ester-based plasticizers, such as di-2-ethylhexyl adipate (DOA), diisobutyl adipate (DIBA), dibutyl adipate (DBA), di-n-octyl adipate, di-n-decyl adipate, diisodecyl adipate, di-2-ethylhexyl azelate (DOZ), dibutyl sebacate, and di-2-ethylhexyl sebacate;

trimellitic acid ester-based plasticizers, such as tri-2-ethylhexyl trimellitate (TOTM), tri-n-octyl trimellitate, tridecyl trimellitate, triisodecyl trimellitate, and di-n-octyl-n-decyl trimellitate;

adipic acid ester-based plasticizers, such as di-2-ethylhexyl adipate (DOA) and diisodecyl adipate (DIDA);

sebacic acid ester-based plasticizers, such as dibutyl sebacate (DBS) and di-2-ethylhexyl sebacate (DOS);

phosphoric acid ester-based plasticizers, such as tributyl phosphate, trioctyl phosphate, octyl diphenyl phosphate, tributoxyethyl phosphate, trichloroethyl phosphate, tris(2-chloropropyl)phosphate, tris(2,3-dichloropropyl)phosphate, tris(2,3-dibromopropyl)phosphate,

tris(bromochloropropyl)phosphate, bis(2,3-dibromopropyl)-2,3-dichloropropyl phosphate, and bis(chloropropyl)monooctyl phosphate;

biphenyltetracarboxylic acid tetraalkyl ester-based plasticizers, such as 2,3,3',4'-biphenyltetracarboxylic acid tetraheptyl ester; polyester-based polymeric plasticizers;

epoxy-based plasticizers, such as epoxidized soybean oil, epoxidized linseed oil, epoxidized cottonseed oil, and liquid epoxy resin;

chlorinated paraffin;

chlorinated fatty acid esters, such as pentachlorostearic acid alkyl ester;

phosphorus compounds that are liquid at room temperature; and the like.

The phosphorus compounds that are liquid at room temperature are not particularly limited. Examples include phosphoric acid esters, such as trimethyl phosphate, triethyl phosphate, tributyl phosphate, tris(2-ethylhexyl) phosphate, triphenyl phosphate, tricresyl phosphate (TCP), trixylenyl phosphate, cresyl diphenyl phosphate, and xylenyl diphenyl phosphate.

Among the above liquid additives, phthalic acid-based plasticizers are preferable in terms of flame retardancy and economic viewpoint. Further, phosphoric acid plasticizers are preferable in terms of further excellent flame retardancy.

The amount of the liquid additive is not particularly limited. However, the amount of the liquid additive is preferably 5 to 50 mass%, more preferably 10 to 25 mass%, in the fire-resistant resin composition. In one embodiment, the amount of the liquid additive in the fire-resistant resin composition is 10 mass% or more. The ignition point of the liquid additive is preferably 350°C or more. By using liquid additives in this range, the combustion of the other easily combustible components of the fire-resistant resin composition is completed at the above temperature, thereby inhibiting the spread of fire to the other components by the ignition of the liquid additive. Further, the liquid additive imparts flame retardancy to the fire-resistant resin composition, while keeping the effects of the other components.

Polyphosphoric acid salt

The fire-resistant resin composition of the present invention may contain a polyphosphoric acid salt.

Examples of polyphosphoric acid salts include ammonium polyphosphate (APP), melamine polyphosphate, melam polyphosphate, and the like. The polyphosphoric acid salt is preferably ammonium polyphosphate. In particular, when these flame retardants are combined with a liquid additive, the water resistance of the fire-resistant resin composition is notably improved. Examples of commercially available products of ammonium polyphosphate include "AP422" and "AP462" produced by Clariant, "Sumisafe P" produced by Sumitomo Chemical Industry Company Limited, and "Terraju C-60" produced by Chisso Corporation. Examples of commercially available products of melam polyphosphate include Phosmel-200 produced by Nissan Chemical Industries, Ltd.

Preferred ammonium polyphosphate is surface-coated ammonium polyphosphate (also referred to as "coated ammonium polyphosphate"). Among coated ammonium polyphosphate, melamine-coated ammonium polyphosphate, which is surface-coated with melamine, is disclosed in JPH09-286875A, and silane-coated ammonium polyphosphate, which is surface-coated with silane, is disclosed in JP2000-063562A. Melamine-coated ammonium polyphosphate is (a) melamine-coated ammonium polyphosphate in which melamine is added and/or adhered to the surface of powdery ammonium polyphosphate particles; (b) coated ammonium polyphosphate in which the surface of the melamine-coated ammonium polyphosphate particles is crosslinked by a reaction of active hydrogen of amino groups in melamine molecules present in the coating layer of the melamine-coated ammonium polyphosphate particles, and a compound having a functional group capable of reacting with the active hydrogen; and/or (c) coated ammonium polyphosphate in which the surface of powdery ammonium polyphosphate or the melamine-coated ammonium polyphosphate particles is coated with a thermosetting resin. Examples of commercially available products of melamine-coated ammonium polyphosphate particles include "AP462" produced by Clariant, "FR CROS 484" and "FR CROS 487" produced by Budenheim Iberica, and the like. Examples of commercially available products of silane-coated ammonium polyphosphate particles include "FR CROS 486" produced by Budenheim Iberica.

The amount of the polyphosphoric acid salt in the fire-resistant resin composition is preferably 5 to 50 mass%. By using polyphosphoric acid salts in this range, it is possible to impart flame retardancy and water resistance to the resin composition, while keeping the effects of the other components.

Further, when a polyphosphoric acid salt is added, the polyphosphoric acid salt is preferably added so that the ratio of the polyphosphoric acid salt to the lower phosphoric acid salt (amount of polyphosphoric acid salt/amount of lower phosphoric acid salt) is 1.0 or less, more preferably 0.5 or less.

Furthermore, the resin composition of the present invention may optionally contain, within a range that does not impair the object of the present invention, an inorganic filler, a phenol, amine, sulfur, or similar-substance-based antioxidants; a metal deterioration inhibitor; an antistatic agent; a stabilizer; a thermal stabilizer; a crosslinking agent; a lubricant; a softening agent; a pigment; a tackifier resin; a molding auxiliary material; and like additives. The resin composition may also optionally contain a polybutene, a petroleum resin, and like tackifiers.

When an expandable heat-insulating layer is formed, the inorganic filler contained therein increases the heat capacity and suppresses the heat transfer, and also functions as an aggregate, thereby improving the strength of the expandable heat-insulating layer. Examples of inorganic fillers include, but are not particularly limited to, metal oxides, such as alumina, zinc oxide, titanium oxide, calcium oxide, magnesium oxide, iron oxide, tin oxide, antimony oxide, and ferrites; hydrated inorganic substances, such as calcium hydroxide, magnesium hydroxide, aluminum hydroxide, and hydrotalcite; metal carbonates, such as basic magnesium carbonate, calcium carbonate, magnesium carbonate, zinc carbonate, strontium carbonate, and barium carbonate; calcium salts, such as calcium sulfate, gypsum fiber, and calcium silicate; silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, graphite, carbon fiber, carbon balloon, charcoal powder, various types of metal powder, potassium titanate, magnesium sulfate "MOS" (trade name), lead zirconate titanate, zinc stearate, calcium stearate, aluminum borate, molybdenum sulfide, silicon carbide, stainless steel fiber, zinc borate, various types of magnetic powder, slag fiber, fly ash, dehydrated sludge, and the like. These inorganic fillers may be used singly, or in a combination of two or more.

Examples of the stabilizer include stabilizers for polyvinyl chloride resins. The amount of the above stabilizer to be incorporated is not limited. However, the amount is preferably reduced in terms of maintaining the strength of the fire-resistant resin composition, and preferably increased in terms of facilitating stabilization of polyvinyl chloride resin. For example, the amount of the stabilizer in the fire-resistant resin composition is 0.1 to 5 mass%.

The fire-resistant member of the present invention as a molded article may be obtained by melt-extrusion of the above fire-resistant resin composition in accordance with ordinary procedures using an extruder such as a single-shaft extruder, twin-shaft extruder, or the like. The fusing temperature varies depending on the resin component, and is not particularly limited; for example, the fusing temperature is 130 to 170°C when a polyvinyl chloride resin is used as the matrix resin.

The fire-resistant resin composition of the present invention and the fire-resistant member formed from the fire-resistant resin composition contain 65 mass% or less of a flammable component, and have excellent flame retardancy. The amount of the flammable component is 57.5 mass% or less, more preferably 50 mass% or less. Further, in the present invention, the lower limit of the amount of the flammable component is not particularly limited: however, the amount is not less than 25 mass%, more preferably not less than 35 mass%.

In this specification, the amount of the flammable component is mainly an amount of an organic flammable component that burns when the fire-resistant resin composition or a fire-resistant member formed from the fire-resistant resin composition is heated; the amount is obtained by the following formula.

```
Amount of flammable component (mass%) = {(weight of
sample before heating)-(weight of sample after heating)}/(weight
of sample before heating)
```

The amount of the flammable component in the present invention is mainly an amount of an organic flammable component that burns when the fire-resistant resin composition or a fire-resistant member formed from the fire-resistant resin composition is heated at 600°C for 30 minutes.

As a result of extensive research, it was found that the ignition property and the residual weight in a fire-resistant furnace and the amount of flammable component according to the above condition are related.

The fire-resistant member of the present invention can be used for imparting fire resistance to structures, in particular, structures as fire prevention equipment such as fittings, including windows, *shoji* [paper sliding doors], doors, sliding doors, *fusuma* [Japanese sliding screens], and *ramma* [transoms]; ships; and elevators. The fire-resistant member of the present invention is used, in particular, for sealing openings or gaps, and fire prevention in these structures. For example, the fire-resistant member 1 of the present invention can be used as an airtight material, such as a tight material or a sealing material, for improving airtightness or watertightness of fittings. Such structures may be made of any material, such as metal, synthetic resin, wood, or a combination thereof. The "opening" refers to an opening existing between a structure and another structure; or an opening existing in a structure. Among openings, a "gap" refers to an opening found between two opposing components or portions.

The present invention is described below in more detail with reference to Examples. However, the present invention is not limited to these Examples.

Examples

Examples 1 to 12, 14 to 15, and 22 to 37

Comparative Examples 1 to 3, 5, 6, and 9

The mixtures having the formulations shown in Table 1 were melt-mixed using a kneading roller at 140°C, thereby obtaining resin compositions. Each of the obtained resin compositions was press-molded with 3-minute preheating and 3-minute pressure application at a temperature of 140°C and a pressure of 150 kg/cm$^2$, thereby producing samples for the Examples and Comparative Examples to be used for performance evaluation.

Examples 13, and 16 to 21

Comparative Examples 4, 7, and 8

The mixtures having the formulations shown in Table 1 were supplied to a planetary stirring machine and kneaded; thereafter, each mixture was applied onto a release PET film, followed by pressing, thereby obtaining a sheet-shaped molded article. Thereafter, the obtained molded article was placed in a constant-temperature bath at 90° C for 10 hours, and the sheet was cured, thereby producing a thermally expandable fire-resistant sheet.

The samples of Examples and Comparative Examples were subjected to the following performance evaluation. The results are shown in Table 1.

(1) Expansion Start Temperature

The expansion start temperature was measured in a sheet state. The temperature of the sheet was increased at 5° C/min, the normal stress was measured using a rheometer, and the temperature at the rise was defined as the expansion start temperature.

(2) Flash Point

The flash point and the ignition point of the liquid additive were measured according to a previously known method.

(3) Amount of Flammable Component

A sample having a thickness of 1.5 mm was cut to a size of 10 cm × 10 cm. The sample was placed in a predetermined holder, and treated in an electric furnace at 600° C for 30 minutes; thereafter, the amount of flammable component was measured. The measured value was an average of the measured values of two samples.

(4) Self-Extinguishing Property

A 5-mm calcium silicate plate (A&A Material Corporation) was cut to a size of 1180 mm × 1180 mm, and a fire-resistant sheet was adhered to the central portion at a size of 300 mm × 300 mm and a thickness of 1.5 mm with an iron needle using a staple gun. The central portion, the four corners, and the intermediate point of each side, i.e., 9 portions, were fixed by iron needle, thereby producing a specimen. The temperature of the specimen was adjusted according to the ISO834 standard fire curve, and a fire resistance test was performed for 20 minutes by setting a furnace pressure to 20 Pa. The specimen during the fire resistance test was observed, and a specimen in which ignition of the expansible material adhered thereto did not occur was graded as S, a specimen in which the fire was terminated within 3 seconds was graded as A, a specimen in which the fire was terminated within 10 seconds was graded as B, and a specimen in which the combustion of the expansible material continued for more than 10 seconds was graded as C. The test for epoxy-based fire-resistant sheet was performed after removing the PET film used in the production.

[Table 1]

Table 1

| | | Grade | Manufacturer | Ignition Point/°C | Flash Point/°C | Expansion Start Temp./°C | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|---|---|
| Matrix Component | Polyvinyl Chloride Resin | TS1000R | Tokuyama Sekisui Co., Ltd. | - | - | - | 100 | 100 | 100 | 100 | 100 | 100 | 0 | 0 | 0 | 0 | 100 | 100 |
| | Polyethylene Resin | UE320 | Japan Polyethylene Corporation | - | - | - | 0 | 0 | 0 | 0 | 0 | 0 | 100 | 0 | 0 | 0 | 0 | 0 |
| | EVA | EV260 | Du Pont-Mitsui Polychemicals Co., Ltd. | - | - | - | 0 | 0 | 0 | 0 | 0 | 0 | 0 | 100 | 0 | 0 | 0 | 0 |
| | EPDM | Mitsui EPT 3092PM | Mitsui Chemicals, Inc. | - | - | - | 0 | 0 | 0 | 0 | 0 | 0 | 0 | 0 | 100 | 0 | 0 | 0 |
| | Butyl Rubber | Butyl 065 | JSR | - | - | - | 0 | 0 | 0 | 0 | 0 | 0 | 0 | 0 | 0 | 100 | 0 | 0 |
| | Epoxy Base Resin | E807 | Mitsubishi Chemical Corporation | - | - | - | 0 | 0 | 0 | 0 | 0 | 0 | 0 | 0 | 0 | 0 | 0 | 0 |
| | Epoxy Resin Curing Agent (Amine-Based) | FL079 | Mitsubishi Chemical Corporation | - | - | - | 0 | 0 | 0 | 0 | 0 | 0 | 0 | 0 | 0 | 0 | 0 | 0 |
| Liquid Additive | DOP | - | J-PLUS Co., Ltd. | 400 | 218 | - | 0 | 0 | 0 | 0 | 0 | 0 | 0 | 0 | 0 | 0 | 0 | 0 |
| | TCP | Sanso Cizer TCP | New Japan Chemical Co., Ltd. | 606 | 240 | - | 0 | 0 | 0 | 0 | 0 | 0 | 0 | 0 | 0 | 0 | 0 | 0 |
| | DIDP | - | J-PLUS Co., Ltd. | 386 | 234 | - | 0 | 0 | 0 | 0 | 100 | 50 | 0 | 0 | 0 | 0 | 100 | 100 |
| | DOZ | - | Daihachi Chemical Industry Co., Ltd. | 347 | 211 | - | 0 | 0 | 0 | 0 | 0 | 0 | 0 | 0 | 0 | 0 | 0 | 0 |
| | DBP | - | Daihachi Chemical Industry Co., Ltd. | 402 | 167 | - | 0 | 0 | 0 | 0 | 0 | 0 | 0 | 0 | 0 | 0 | 0 | 0 |
| | DEP | - | Daihachi Chemical Industry Co., Ltd. | 457 | 117 | - | 0 | 0 | 0 | 0 | 0 | 0 | 0 | 0 | 0 | 0 | 0 | 0 |
| Thermally Expandable Graphite | Thermally Expandable Graphite (Particle Size = 600 μm) | GA60N | Air Water Inc. | - | - | 220 | 50 | 50 | 50 | 50 | 50 | 50 | 50 | 50 | 50 | 50 | 100 | 200 |
| | Thermally Expandable Graphite (Particle Size = 500 μm) | ADT351 | ADT | - | - | 205 | 0 | 0 | 0 | 0 | 0 | 0 | 0 | 0 | 0 | 0 | 0 | 0 |
| | Thermally Expandable Graphite (Particle Size = 600 μm) | ADT501 | ADT | - | - | 160 | 0 | 0 | 0 | 0 | 0 | 0 | 0 | 0 | 0 | 0 | 0 | 0 |
| | Thermally Expandable Graphite (Particle Size = 400 μm) | MZ260 | Air Water Inc. | - | - | 260 | 0 | 0 | 0 | 0 | 0 | 0 | 0 | 0 | 0 | 0 | 0 | 0 |
| Lower Phosphoric Acid Salt | Aluminum Primary Phosphate | 100P | Taki Chemical Co., Ltd. | - | - | - | 0 | 0 | 50 | 5 | 0 | 0 | 0 | 0 | 0 | 0 | 0 | 0 |
| | Aluminum Phosphate | APA100 | Taihei Chemical Industrial Co., Ltd. | - | - | - | 50 | 10 | 50 | 5 | 50 | 50 | 75 | 75 | 75 | 75 | 50 | 50 |
| Flame Retardant | Ammonium Polyphosphate | AP462 | Clariant Chemicals | - | - | - | 0 | 0 | 0 | 0 | 0 | 0 | 0 | 0 | 0 | 0 | 0 | 0 |
| | Melam Polyphosphate | Phosmel-200 | Nissan Chemical Industries, Ltd. | - | - | - | 0 | 0 | 0 | 0 | 0 | 0 | 0 | 0 | 0 | 0 | 0 | 0 |
| Inorganic Filler | Calcium Carbonate | BF300 | Shiraishi Calcium Kaisha, Ltd. | - | - | - | 0 | 0 | 0 | 0 | 0 | 0 | 0 | 0 | 0 | 0 | 0 | 0 |
| Lower Phosphoric Acid Proportion/Mass% | | | | | | | 25.0 | 6.3 | 40.0 | 6.3 | 16.7 | 20.0 | 33.3 | 33.3 | 33.3 | 33.3 | 14.3 | 11.1 |
| Amount of Flammable Component | | | | | | | 48.5 | 58.7 | 36.5 | 59.8 | 62.3 | 57.4 | 44.2 | 44.3 | 44.4 | 44.4 | 54.5 | 41.6 |
| Ignition | | | | | | | S | A | S | A | S | A | S | S | S | S | S | S |

Temp.: Temperature

[Table 2]

Table 1 (continued)

| | | Grade | Manufacturer | Ignition Point/°C | Flash Point/°C | Expansion Start Temp./°C | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|---|---|---|
| Matrix Component | Polyvinyl Chloride Resin | TS1000R | Tokuyama Sekisui Co., Ltd. | - | - | - | 0 | 100 | 100 | 0 | 0 | 0 | 0 | 0 | 0 | 100 | 100 | 100 |
| | Polyethylene Resin | UE320 | Japan Polyethylene Corporation | - | - | - | 0 | 0 | 0 | 0 | 0 | 0 | 0 | 0 | 0 | 0 | 0 | 0 |
| | EVA | EV260 | Du Pont-Mitsui Polychemicals Co., Ltd. | - | - | - | 0 | 0 | 0 | 0 | 0 | 0 | 0 | 0 | 0 | 0 | 0 | 0 |
| | EPDM | Mitsui EPT 3092PM | Mitsui Chemicals, Inc. | - | - | - | 0 | 0 | 0 | 0 | 0 | 0 | 0 | 0 | 0 | 0 | 0 | 0 |
| | Butyl Rubber | Butyl 065 | JSR | - | - | - | 0 | 0 | 0 | 0 | 0 | 0 | 0 | 0 | 0 | 0 | 0 | 0 |
| | Epoxy Base Resin | E807 | Mitsubishi Chemical Corporation | - | - | - | 60 | 0 | 0 | 60 | 60 | 60 | 60 | 60 | 75 | 0 | 0 | 0 |
| | Epoxy Resin Curing Agent (Amine-Based) | FL079 | Mitsubishi Chemical Corporation | - | - | - | 40 | 0 | 0 | 40 | 40 | 40 | 40 | 40 | 65 | 0 | 0 | 0 |
| Liquid Additive | DOP | - | J-PLUS Co., Ltd. | 400 | 218 | - | 0 | 0 | 0 | 0 | 0 | 0 | 0 | 0 | 0 | 0 | 0 | 80 |
| | TCP | Sanso Cizer TCP | New Japan Chemical Co., Ltd. | 606 | 240 | - | 0 | 0 | 0 | 0 | 0 | 0 | 0 | 0 | 30 | 0 | 80 | 0 |
| | DIDP | - | J-PLUS Co., Ltd. | 386 | 234 | - | 0 | 100 | 100 | 0 | 0 | 0 | 0 | 0 | 0 | 80 | 0 | 0 |
| | DOZ | - | Daihachi Chemical Industry Co., Ltd. | 347 | 211 | - | 0 | 0 | 0 | 0 | 0 | 0 | 0 | 0 | 0 | 0 | 0 | 0 |
| | DBP | - | Daihachi Chemical Industry Co., Ltd. | 402 | 157 | - | 0 | 0 | 0 | 0 | 0 | 0 | 0 | 0 | 0 | 0 | 0 | 0 |
| | DEP | - | Daihachi Chemical Industry Co., Ltd. | 457 | 117 | - | 0 | 0 | 0 | 0 | 0 | 0 | 0 | 0 | 0 | 0 | 0 | 0 |
| Thermally Expandable Graphite | Thermally Expandable Graphite (Particle Size = 800 μm) | CA60N | Air Water Inc. | - | - | 220 | 100 | 50 | 50 | 100 | 0 | 0 | 100 | 100 | 50 | 45 | 45 | 45 |
| | Thermally Expandable Graphite (Particle Size = 500 μm) | ADT351 | ADT | - | - | 205 | 0 | 0 | 0 | 0 | 100 | 0 | 0 | 0 | 0 | 0 | 0 | 0 |
| | Thermally Expandable Graphite (Particle Size = 600 μm) | ADT501 | ADT | - | - | 150 | 0 | 0 | 0 | 0 | 0 | 100 | 0 | 0 | 0 | 0 | 0 | 0 |
| | Thermally Expandable Graphite (Particle Size = 400 μm) | MZ260 | Air Water Inc. | - | - | 260 | 0 | 0 | 0 | 0 | 0 | 0 | 0 | 0 | 0 | 0 | 0 | 0 |
| Lower Phosphoric Acid Salt | Aluminum Primary Phosphate | 100P | Taki Chemical Co., Ltd. | - | - | - | 0 | 0 | 0 | 100 | 0 | 0 | 0 | 0 | 0 | 0 | 0 | 0 |
| | Aluminum Phosphite | APA100 | Taihei Chemical Industrial Co., Ltd. | - | - | - | 100 | 37.5 | 25 | 0 | 100 | 100 | 50 | 30 | 25 | 45 | 45 | 45 |
| Flame Retardant | Ammonium Polyphosphate | AP462 | Clariant Chemicals | - | - | - | 0 | 12.5 | 25 | 0 | 0 | 0 | 0 | 0 | 0 | 0 | 0 | 0 |
| | Melam Polyphosphate | Phosmel-200 | Nissan Chemical Industries, Ltd. | - | - | - | 0 | 0 | 0 | 0 | 0 | 0 | 0 | 0 | 0 | 0 | 0 | 0 |
| Inorganic Filler | Calcium Carbonate | BF300 | Shiraishi Calcium Kaisha, Ltd. | - | - | - | 100 | 0 | 0 | 100 | 100 | 100 | 150 | 170 | 25 | 0 | 0 | 0 |
| Lower Phosphoric Acid Proportion/Mass% | | | | | | | 25.0 | 12.5 | 8.3 | 25.0 | 25.0 | 25.0 | 25.0 | 12.5 | 9.3 | 16.7 | 16.7 | 16.7 |
| Amount of Flammable Component | | | | | | | 29.6 | 60.4 | 58.2 | 31.6 | 30.8 | 32.6 | 30.4 | 29.6 | 58.9 | 62.5 | 63.2 | 64.5 |
| Ignition | | | | | | | S | A | A | S | S | S | S | S | A | B | B | B |

Temp.: Temperature

[Table 3]

Table 1 (continued)

| | | Grade | Manufacturer | Ignition Point/°C | Flash Point/°C | Expansion Start Temp./°C | Example 25 | Example 26 | Example 27 | Example 28 | Example 29 | Example 30 | Example 31 | Example 32 | Example 33 | Example 34 | Example 35 | Example 36 | Example 37 |
|---|---|---|---|---|---|---|---|---|---|---|---|---|---|---|---|---|---|---|---|
| Matrix Component | Polyvinyl Chloride Resin | TS1000R | Tokuyama Sekisui Co., Ltd. | - | - | - | 100 | 100 | 100 | 100 | 0 | 0 | 0 | 0 | 0 | 0 | 100 | 100 | 100 |
| | Polyethylene Resin | UE320 | Japan Polyethylene Corporation | - | - | - | 0 | 0 | 0 | 0 | 0 | 0 | 0 | 0 | 0 | 0 | 0 | 0 | 0 |
| | EVA | EV260 | Du Pont-Mitsui Polychemicals Co., Ltd. | - | - | - | 0 | 0 | 0 | 0 | 100 | 100 | 100 | 100 | 100 | 100 | 0 | 0 | 0 |
| | EPDM | Mitsui EPT 3092PM | Mitsui Chemicals, Inc. | - | - | - | 0 | 0 | 0 | 0 | 0 | 0 | 0 | 0 | 0 | 0 | 0 | 0 | 0 |
| | Butyl Rubber | Butyl 065 | JSR | - | - | - | 0 | 0 | 0 | 0 | 0 | 0 | 0 | 0 | 0 | 0 | 0 | 0 | 0 |
| | Epoxy Base Resin | E807 | Mitsubishi Chemical Corporation | - | - | - | 0 | 0 | 0 | 0 | 0 | 0 | 0 | 0 | 0 | 0 | 0 | 0 | 0 |
| | Epoxy Resin Curing Agent (Amine-Based) | FL079 | Mitsubishi Chemical Corporation | - | - | - | 0 | 0 | 0 | 0 | 0 | 0 | 0 | 0 | 0 | 0 | 0 | 0 | 0 |
| Liquid Additive | DOP | - | J-PLUS Co., Ltd. | 400 | 218 | - | 80 | 80 | 0 | 0 | 0 | 0 | 0 | 0 | 0 | 0 | 0 | 0 | 0 |
| | TCP | Sanso Cizer TCP | New Japan Chemical Co., Ltd. | 606 | 240 | - | 0 | 0 | 0 | 0 | 0 | 0 | 0 | 0 | 0 | 40 | 0 | 0 | 0 |
| | DIDP | - | J-PLUS Co., Ltd. | 386 | 234 | - | 0 | 0 | 80 | 80 | 0 | 0 | 0 | 0 | 0 | 0 | 100 | 100 | 100 |
| | DOZ | - | Daihachi Chemical Industry Co., Ltd. | 347 | 211 | - | 0 | 0 | 0 | 0 | 0 | 0 | 0 | 0 | 0 | 0 | 0 | 0 | 0 |
| | DBP | - | Daihachi Chemical Industry Co., Ltd. | 402 | 157 | - | 0 | 0 | 0 | 0 | 0 | 0 | 0 | 0 | 0 | 0 | 0 | 0 | 0 |
| | DEP | - | Daihachi Chemical Industry Co., Ltd. | 457 | 117 | - | 0 | 0 | 0 | 0 | 0 | 0 | 0 | 0 | 0 | 0 | 0 | 0 | 0 |
| Thermally Expandable Graphite | Thermally Expandable Graphite (Particle Size = 800 μm) | CA60N | Air Water Inc. | - | - | 220 | 90 | 90 | 0 | 0 | 50 | 0 | 0 | 75 | 100 | 100 | 50 | 50 | 50 |
| | Thermally Expandable Graphite (Particle Size = 500 μm) | ADT351 | ADT | - | - | 205 | 0 | 0 | 90 | 0 | 0 | 50 | 0 | 0 | 0 | 0 | 0 | 0 | 0 |
| | Thermally Expandable Graphite (Particle Size = 600 μm) | ADT501 | ADT | - | - | 150 | 0 | 0 | 0 | 90 | 0 | 0 | 50 | 0 | 0 | 0 | 0 | 0 | 0 |
| | Thermally Expandable Graphite (Particle Size = 400 μm) | MZ260 | Air Water Inc. | - | - | 260 | 0 | 0 | 0 | 0 | 0 | 0 | 0 | 0 | 0 | 0 | 0 | 0 | 0 |
| Lower Phosphoric Acid Salt | Aluminum Primary Phosphate | 100P | Taki Chemical Co., Ltd. | - | - | - | 0 | 0 | 0 | 0 | 0 | 0 | 0 | 0 | 0 | 0 | 0 | 0 | 0 |
| | Aluminum Phosphite | APA100 | Taihei Chemical Industrial Co., Ltd. | - | - | - | 45 | 20 | 90 | 90 | 50 | 75 | 75 | 75 | 75 | 75 | 37.5 | 25 | 15 |
| Flame Retardant | Ammonium Polyphosphate | AP462 | Clariant Chemicals | - | - | - | 0 | 0 | 0 | 0 | 0 | 0 | 0 | 0 | 0 | 0 | 0 | 0 | 0 |
| | Melam Polyphosphate | Phosmel-200 | Nissan Chemical Industries, Ltd. | - | - | - | 0 | 0 | 0 | 0 | 0 | 0 | 0 | 0 | 0 | 0 | 12.5 | 25 | 15 |
| Inorganic Filler | Calcium Carbonate | BF300 | Shiraishi Calcium Kaisha, Ltd. | - | - | - | 45 | 70 | 0 | 0 | 25 | 0 | 0 | 25 | 0 | 0 | 0 | 0 | 20 |
| Lower Phosphoric Acid Proportion/Mass% | | | | | | | 12.5 | 5.6 | 25.0 | 25.0 | 22.2 | 33.3 | 33.3 | 30.0 | 27.3 | 23.8 | 12.5 | 8.3 | 5.0 |
| Amount of Flammable Component | | | | | | | 47.8 | 50.8 | 45.4 | 46.2 | 45.2 | 43.1 | 44.2 | 42.5 | 35.8 | 43.9 | 60.5 | 62.8 | 64.0 |
| Ignition | | | | | | | S | S | S | S | S | S | S | S | S | S | A | A | S |

Temp.: Temperature

[Table 4]

Table 1 (continued)

| | | Grade | Manufacturer | Ignition Point/°C | Flash Point/°C | Expansion Start Temp./°C | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|---|---|---|---|---|
| Matrix Component | Polyvinyl Chloride Resin | TS1000R | Tokuyama Sekisui Co., Ltd. | - | - | - | 0 | 0 | 100 | 0 | 100 | 100 | 0 | 0 | 100 |
| | Polyethylene Resin | UE820 | Japan Polyethylene Corporation | - | - | - | 100 | 100 | 0 | 0 | 0 | 0 | 0 | 0 | 0 |
| | EVA | EV260 | Du Pont-Mitsui Polychemicals Co., Ltd. | - | - | - | 0 | 0 | 0 | 0 | 0 | 0 | 0 | 0 | 0 |
| | EPDM | Mitsui EPT 3092PM | Mitsui Chemicals, Inc. | - | - | - | 0 | 0 | 0 | 0 | 0 | 0 | 0 | 0 | 0 |
| | Butyl Rubber | Butyl 065 | JSR | - | - | - | 0 | 0 | 0 | 0 | 0 | 0 | 0 | 0 | 0 |
| | Epoxy Base Resin | E807 | Mitsubishi Chemical Corporation | - | - | - | 0 | 0 | 0 | 75 | 0 | 0 | 75 | 75 | 0 |
| | Epoxy Resin Curing Agent (Amine-Based) | FL079 | Mitsubishi Chemical Corporation | - | - | - | 0 | 0 | 0 | 60 | 0 | 0 | 60 | 60 | 0 |
| Liquid Additive | DOP | - | J-PLUS Co., Ltd. | 400 | 218 | - | 0 | 0 | 0 | 0 | 0 | 0 | 0 | 0 | 80 |
| | TCP | Sanso Cizer TCP | New Japan Chemical Co., Ltd. | 606 | 240 | - | 0 | 0 | 0 | 30 | 0 | 0 | 0 | 0 | 0 |
| | DIDP | - | J-PLUS Co., Ltd. | 386 | 234 | - | 0 | 0 | 100 | 0 | 80 | 0 | 0 | 0 | 0 |
| | DOZ | - | Daihachi Chemical Industry Co., Ltd. | 347 | 211 | - | 0 | 0 | 0 | 0 | 0 | 80 | 0 | 0 | 0 |
| | DBP | - | Daihachi Chemical Industry Co., Ltd. | 402 | 157 | - | 0 | 0 | 0 | 0 | 0 | 0 | 30 | 0 | 0 |
| | DEP | - | Daihachi Chemical Industry Co., Ltd. | 457 | 117 | - | 0 | 0 | 0 | 0 | 0 | 0 | 0 | 30 | 0 |
| Thermally Expandable Graphite | Thermally Expandable Graphite (Particle Size = 800 µm) | CA60N | Air Water Inc. | - | - | 220 | 20 | 30 | 50 | 0 | 0 | 0 | 0 | 0 | 45 |
| | Thermally Expandable Graphite (Particle Size = 500 µm) | ADT351 | ADT | - | - | 205 | 0 | 0 | 0 | 0 | 0 | 45 | 0 | 0 | 0 |
| | Thermally Expandable Graphite (Particle Size = 600 µm) | ADT501 | ADT | - | - | 150 | 0 | 0 | 0 | 0 | 0 | 0 | 50 | 50 | 0 |
| | Thermally Expandable Graphite (Particle Size = 400 µm) | MZ260 | Air Water Inc. | - | - | 260 | 0 | 0 | 0 | 50 | 45 | 0 | 0 | 0 | 0 |
| Lower Phosphoric Acid Salt | Aluminum Primary Phosphate | 100P | Taki Chemical Co., Ltd. | - | - | - | 0 | 5 | 0 | 0 | 0 | 0 | 0 | 0 | 0 |
| | Aluminum Phosphite | APA100 | Taihei Chemical Industrial Co., Ltd. | - | - | - | 30 | 5 | 0 | 25 | 45 | 45 | 25 | 25 | 45 |
| Flame Retardant | Ammonium Polyphosphate | AP462 | Clariant Chemicals | - | - | - | 0 | 0 | 0 | 0 | 0 | 0 | 0 | 0 | 0 |
| | Melam Polyphosphate | Phosmel-200 | Nissan Chemical Industries, Ltd. | - | - | - | 0 | 0 | 0 | 0 | 0 | 0 | 0 | 0 | 0 |
| Inorganic Filler | Calcium Carbonate | BF300 | Shiraishi Calcium Kaisha, Ltd. | - | - | - | 0 | 0 | 0 | 25 | 0 | 0 | 25 | 25 | 0 |
| Lower Phosphoric Acid Proportion/Mass% | | | | | | | 20.0 | 7.1 | 0.0 | 9.4 | 16.7 | 16.7 | 9.4 | 9.4 | 16.7 |
| Amount of Flammable Component | | | | | | | 66.0 | 71.4 | 76.5 | 66.5 | 68.2 | 69.1 | 67.3 | 68.0 | 66.8 |
| Ignition | | | | | | | C | C | C | C | C | C | C | C | C |

Comp. Example = Comparative Example Temp.: Temperature

## Claims

1. A fire-resistant resin composition comprising a matrix resin, a thermally expandable graphite, and a lower phosphoric acid salt, the fire-resistant resin composition comprising the lower phosphoric acid salt in an amount of 5 mass% or more, and a flammable component in an amount of 65 mass% or less.

2. The fire-resistant resin composition according to claim 1, wherein the fire-resistant resin composition further comprises a liquid additive; the ignition point of the liquid additive in the fire-resistant resin composition is 350°C or more; and the amount of the liquid additive is 10 mass% or more.

3. The fire-resistant resin composition according to claim 1 or 2, wherein the lower phosphoric acid salt is at least one of a metal phosphate and a metal phosphite.

4. The fire-resistant resin composition according to claim 2 or 3, wherein the expansion start temperature of the thermally expandable graphite in the fire-resistant resin composition is not more than the flash point of the liquid additive, and the amount of the thermally expandable graphite is 15 mass% or more.

5. The fire-resistant resin composition according to any one of claims 1 to 4, wherein the fire-resistant resin composition comprises a polyphosphoric acid salt, and the ratio of the polyphosphoric acid salt to the lower phosphoric acid salt (polyphosphoric acid salt/lower phosphoric acid salt) is 1.0 or less.

6. The fire-resistant resin composition according to any one of claims 1 to 5, wherein the matrix resin comprises a vinyl chloride resin.

7. The fire-resistant resin composition according to any one of claims 1 to 5, wherein the matrix resin comprises an epoxy resin.

8. A fire-resistant member formed from the fire-resistant resin composition according to any one of claims 1 to 7.

9. The fire-resistant member according to claim 8, wherein the fire-resistant member is a molded article.

10. A fire prevention equipment comprising the fire-resistant member according to claim 8 or 9.

## INTERNATIONAL SEARCH REPORT

| International application No. |
| --- |
| PCT/JP2017/001929 |

| A. CLASSIFICATION OF SUBJECT MATTER |
| --- |
| *C08L101/00*(2006.01)i, *C08K3/04*(2006.01)i, *C08K3/32*(2006.01)i, *C09K21/02* (2006.01)i, *C09K21/04*(2006.01)i |

According to International Patent Classification (IPC) or to both national classification and IPC

| B. FIELDS SEARCHED |
| --- |

Minimum documentation searched (classification system followed by classification symbols)
C08L101/00, C08K3/04, C08K3/32, C09K21/02, C09K21/04

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X A | JP 2009-138184 A (Denki Kagaku Kogyo Kabushiki Kaisha), 25 June 2009 (25.06.2009), claims; paragraph [0048]; examples (Family: none) | 1-4,8-10 5-7 |
| X A | JP 2009-138147 A (Denki Kagaku Kogyo Kabushiki Kaisha), 25 June 2009 (25.06.2009), claims; paragraph [0048]; examples & JP 4270470 B1 | 1-4,8-10 5-7 |
| X A | JP 2008-138180 A (Denki Kagaku Kogyo Kabushiki Kaisha), 19 June 2008 (19.06.2008), claims; paragraph [0025]; examples & JP 4068135 B1 | 1-4,8-10 5-7 |

[X] Further documents are listed in the continuation of Box C.    [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 March 2017 (09.03.17) | 21 March 2017 (21.03.17) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

International application No.

PCT/JP2017/001929

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2008-115359 A (Denki Kagaku Kogyo Kabushiki Kaisha),<br>22 May 2008 (22.05.2008),<br>claims; paragraph [0041]; examples<br>& JP 4021934 B1 & CN 101161715 A | 1-4,8-10<br>5-7 |
| X<br>A | JP 2007-254563 A (Denki Kagaku Kogyo Kabushiki Kaisha),<br>04 October 2007 (04.10.2007),<br>claims; paragraph [0024]; examples<br>(Family: none) | 1-4,8-10<br>5-7 |
| X<br>A | JP 2006-274134 A (Denki Kagaku Kogyo Kabushiki Kaisha),<br>12 October 2006 (12.10.2006),<br>claims; paragraph [0017]; examples<br>(Family: none) | 1-4,8-10<br>5-7 |
| X<br>A | JP 2007-205472 A (Denki Kagaku Kogyo Kabushiki Kaisha),<br>16 August 2007 (16.08.2007),<br>claims; examples<br>(Family: none) | 1,3,8-10<br>2,4-7 |
| X<br>A | JP 2006-257181 A (Denki Kagaku Kogyo Kabushiki Kaisha),<br>28 September 2006 (28.09.2006),<br>claims; examples<br>(Family: none) | 1,3,8-10<br>2,4-7 |
| X<br>A | JP 2010-184974 A (Alpha Kaken Kabushiki Kaisha),<br>26 August 2010 (26.08.2010),<br>claims; examples<br>(Family: none) | 1,3,8-10<br>2,4-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016008492 A
- JP 2016230006 A
- JP 2004204194 A

- JP H09286875 A
- JP 2000063562 A